# EUROPÄISCHE PATENTANMELDUNG

(11) **EP 1 873 372 A1**
(43) Veröffentlichungstag der Anmeldung: **02.01.2008**
(21) Anmeldenummer: 07106926.4
(22) Anmeldetag: 25.04.2007
(51) Int. Cl.: F02B 37/22

(54) **Verfahren zur Steigerung des Ladedruckaufbaus bei aufgeladenen Verbrennungskraftmaschinen**

(30) Priorität: 27.06.2006 DE 102006029370
(71) Anmelder: ROBERT BOSCH GMBH, 70442 Stuttgart (DE)
(72) Erfinder: Laubender, Jochen, 70439, Stuttgart (DE)

(57) **Zusammenfassung**

Die Erfindung bezieht sich auf eine Aufladeeinrichtung (64) für eine Verbrennungskraftmaschine (82) sowie auf ein Verfahren zur Steigerung des Ladedruckautbaus an der Verbrennungskraftmaschine (82). Die Aufladeeinrichtung (64) umfasst ein Verdichterteil (68) und ein Turbinenteil (70). Die Aufladeeinrichtung (64) ist einer Verbrennungskraftmaschine (82) zugeordnet, die eine Drosseleinrichtung (90) aufweist. Dem Verdichterteil (68) der Aufladeeinrichtung (64) ist eingangsseitig eine weitere Drosseleinrichtung (62) vorgeschaltet.

## Beschreibung

### Stand der Technik

Die Erweiterung der Leistungsgrenzen einer Aufladeeinrichtung, wie zum Beispiel eines Abgasturboladers, erfolgt zum Beispiel durch eine zweistufig geregelte Aufladung, wie sie aus Bosch, Kraftfahrttechnisches Taschenbuch, 23. Auflage, Vieweg, 1999, Seiten 445 bis 446 bekannt ist. Bei der zweistufig geregelten Aufladung sind zwei unterschiedlich große Abgasturbolader in Reihe geschaltet. Der Abgasmassenstrom strömt zunächst in eine Abgassammelrohrleitung. Von hier wird der Abgasmassenstrom über eine Hochdruckturbine expandiert. Bei großen Abgasmengen, wie sie bei hohen Drehzahlen auftreten, kann ein Teil des Abgasmassenstroms über einen Bypass um die Hochdruckturbine herumgeleitet werden. Anschließend wird der gesamte Abgasmassenstrom von einer der Hochdruckturbine nachgeschalteten Niederdruckturbine genutzt. Der angesaugte Frischluftmassenstrom wird zunächst durch eine Niederdruckstufe vorverdichtet und anschließend in der Hochdruckstufe weiterverdichtet. Idealerweise wird der Frischluftmassenstrom zwischen der Niederdruckstufe und der Hochdruckstufe zwischengekühlt.

Bei etwa 50 % bis 60 % der Nenndrehzahl wird das Abgas über einen Bypass vollständig um die Hochdruckturbine herumgeführt. Gleichzeitig wird somit auch der Betrieb des durch die Hochdruckturbine angetriebenen Hochdruckverdichters eingestellt, der mit einem von der Niederdruckturbine angetriebenen Niederdruckverdichter in Reihe geschaltet ist. In diesem Falle wird der Hochdruckverdichter über eine Ladeluftleitung umgangen, in der eine Rückschlagklappe vorgesehen ist, um zu verhindern, dass beim Betrieb des Hochdruckverdichters Ladeluft über die Ladeluftleitung zurückströmt.

Eine zweistufige Aufladung in einer Aufladeeinrichtung erfolgt im Allgemeinen durch zwei in Reihe geschaltete Abgasturbolader. Durch diese wird eine zweistufige Entspannung über die beiden Turbinenteile der beiden Abgasturbolader erreicht, ebenso wie eine zweistufige Verdichtung auf der Verdichterseite der beiden miteinander in Reihe geschalteten Abgasturbolader. Die Nachteile der ungeregelten zweistufigen Aufladung werden durch Regelorgane zur Umgehung der Hochdruckturbine und des Hochdruckverdichters vermieden.

Durch die Absteuerung des Abgasmassenstroms vor der Hochdruckturbine wird die Leistung der Hochdruckturbine geregelt. Der aus der Hochdruckturbine austretende Abgasmassenstrom vermischt sich mit dem Teil des Abgasmassenstroms, der durch die Bypassklappe fließt und wird anschließend in der Niederdruckturbine entspannt. Nachteilig bei dieser Vorgehensweise ist der Umstand, dass das vorhandene Druckgefälle zwischen der Austrittsseite der Verbrennungskraftmaschine und dem Ausgang der Hochdruckturbine über eine Bypassklappe entspannt wird, ohne Arbeit zu leisten.

### Offenbarung der Erfindung

Mit der nachfolgend beschriebenen Erfindung wird das Motormoment von aufgeladenen, mehrzylindrigen Verbrennungskraftmaschinen im Volllastbereich bei niedrigen Drehzahlen deutlich gesteigert und das "Turboloch" verkürzt. Dazu wird eine Verbrennungskraftmaschine, vorzugsweise mit variabler Ventilsteuerung, Drosselklappe, Turbolader und mit einem Bypassventil (Wastegate) parallel zum Turbinenrad im Abgaskrümmer mit einer Drosselvorrichtung vor dem Verdichtereintritt kombiniert. Ist zusätzlich ein Schubumluftventil zwischen Hoch- und Niederdruckseite des Turboladers eingebaut, kann dies zusätzlich in die Erfindung einbezogen werden. Die Verbrennungskraftmaschine kann darin mit einer variablen Ventilsteuerung nur für die Einlassventile, einer variablen Ventilsteuerung nur für die Auslassventile und einer variablen Ventilsteuerung für Einlass- und Auslassventile alternativ ausgestattet sein. Idealerweise besitzt die Verbrennungskraftmaschine eine vollvariable Ventilsteuerung, bei der neben den Ventilöffnungszeiten auch der Ventilhub und das Öffnungs- und Schließverhalten der Ventile uneingeschränkt gesteuert werden kann. Zur Füllungssteigerung im besagten Betriebsbereich der Verbrennungskraftmaschine, kombiniert die nachfolgend eingehender beschriebene Erfindung auf wirkungsvolle Weise das Zusammenspiel von Änderung der Ventilsteuerzeiten, Regelung des Ladedruckes sowie eine gezielte Ansteuerung einer Drosselvorrichtung vor dem Verdichtereintritt einer Aufladeeinrichtung wie zum Beispiel eines Turboladers. Bei Verbrennungskraftmaschinen mit Direkteinspritzung wird zur Füllungssteigerung zusätzlich die Abkühlung der den Zylindern zugeführten Frischluft durch die Verdampfung eingespritzten Kraftstoffs ausgenutzt. Die eingespritzte Kraftstoffmenge kann des Weiteren in Anteile aufgeteilt werden, die im Rahmen früher, mittlerer oder späterer Einspritzzeiten aufgeteilt sind. Teile der frühen und mittleren Einspritzung werden zeitnah mit dem Öffnen der Einlassventile abgesetzt, um eine gute Homogenisierung des sich bildenden Kraftstoffgemisches zu erreichen. Teile der späten Einspritzung werden zeitnah zum Schließen der Einlassventile abgesetzt, um eine möglichst hohe Füllung der einzelnen Zylinder der Verbrennungskraftmaschine zu erreichen. Bei Verbrennungskraftmaschinen mit Saugrohreinspritzung wird diese Abkühlung durch eine synchron zur Ansaugphase der Zylinder abgesetzte Einspritzung bei geöffneten Einlassventilen realisiert. In beiden Fällen kann aufgrund der kühleren Zylinderladung das Verdichtungsverhältnis der Verbrennungskraftmaschine angehoben und der zulässige Zündwinkelbereich der Verbrennungskraftmaschine näher an die Klopfgrenze verschoben werden. Zusätzlich kann in beiden Fällen auch kurzzeitig während der Ventilüberschneidungsphase eingespritzt werden, so dass der Kraftstoff mit dem Restsauerstoff im Abgas im heißen Krümmerrohr thermisch reagieren kann und eine hohe Abgasenthalpie erreicht wird. Dadurch erhöht sich der Energieeintrag in den Turbinenteil einer zum Beispiel als Abgasturbolader ausgebildeten Aufladeeinrichtung und diese wird schneller beschleunigt. Diese Drosselvorrichtung vor dem Verdichtereintritt kann zum Beispiel als Irisblende, als Drosselventil, als Drosselklappe, als Stauklappe oder als eine andere Drosseleinrichtung ausgebildet sein. In einer bevorzugten Ausführung besitzt die Drosselvorrichtung zusätzlich eine Einrichtung, um der einströmenden Luftmasse eine für den Verdichterteil der Aufladeeinrichtung günstige Anströmung so zum Beispiel einen Vordrall aufzuprägen.

Bevorzugt wird die zusätzliche Drosselvorrichtung sehr nahe am Eingang des Verdichterteiles des Abgasturboladers platziert, so dass ein möglichst kleines Todvolumen zwischen der Drosselvorrichtung und dem Verdichtereintritt der bevorzugt als Abgasturbolader ausgebildeten Aufladeeinrichtung entsteht. In einer bevorzugten Ausführung besitzt die als Turbolader ausgebildete Aufladeeinrichtung zusätzlich eine variable Turbinengeometrie (VTG), mit der die Anströmung der Turbinenleitschaufeln gezielt verändert werden kann, so dass sich ein hoher Wirkungsgrad am Turbinenteil eines Abgasturboladers einstellt. Durch das erfindungsgemäß vorgeschlagene Androsseln des Verdichterteils des Abgasturboladers wird vor dem Verdichtereintritt ein lokaler Unterdruck erzeugt, wodurch der Volumenstrom von Frischluft zum Verdichterteil des Abgasturboladers deutlich erhöht wird. Dadurch wird die Verdichterarbeit des Abgasturboladers zum Verdichten der angesaugten Luft deutlich reduziert und dessen Wirkungsgrad erhöht. Als Folge dreht sich das Laufzeug, d.h. das Verdichterrad, die Verbindungswelle und das Turbinenrad einer als Abgasturbolader ausgebildeten Aufladeeinrichtung mit einer höheren Drehzahl gegenüber solchen Systemen ohne Drosselvorrichtung am Verdichtereintritt und kann dadurch schneller auf zum Beispiel dynamische Änderungen im Luftkanal reagieren. Für eine gezielte Ansteuerung der Drosselvorrichtung am Verdichtereintritt besitzt die Drosselvorrichtung vor dem Verdichtereintritt idealerweise eine Lagerückmeldung wie zum Beispiel ein Potentiometer, einen Wegsensor oder ähnliches. Ein spezieller Regelalgorithmus in einem Steuergerät erfasst und kontrolliert die für den Regelalgorithmus wichtigen Eingangsgrößen wie zum Beispiel Ladedruck , Luftmassenstrom, Drosselklappenstellung, Drehzahl der Verbrennungskraftmaschine, Moment der Verbrennungskraftmaschine sowie weitere Größen des Steuergerätes. Daraus berechnet dieses die notwendigen Ausgangsgrößen, die an einzelne Stellglieder ausgegeben werden. Die Lösung gemäß der vorgeschlagenen Erfindung zeigt insbesondere Verbesserungen im Stationärbetrieb und im dynamischen Betrieb der Verbrennungskraftmaschine.

Im stationären Teillastbereich einer Verbrennungskraftmaschine wird die Ventilsteuerung ein- und/oder auslassseitig so eingestellt, dass sich ein möglichst optimales Ausspülen von verbranntem Restgas während des Ladungswechsels ergibt. Über die einlassseitig vor der Verbrennungskraftmaschine angeordnete Drosselklappe, die erfindungsgemäß vorgeschlagene Drosselvorrichtung vor dem Verdichtereintritt einer Aufladeeinrichtung mit Wastegate, wird der Ladedruck im Saugrohr so eingestellt, dass die Drosselverluste beim Ladungswechsel minimiert werden und das Laufzeug die dazu größtmögliche Drehzahl annimmt. Durch Androsselung des Verdichterteils der Aufladeeinrichtung kann im Stationärbetrieb der Ladedruck vor der Drosselklappe der Verbrennungskraftmaschine abgesenkt und diese dadurch weiter geöffnet werden, ohne dass sich der Saugrohrdruck bzw. der Massenstrom nach der Drosselklappe der Verbrennungskraftmaschine ändert.

Durch die reduzierten Drosselverluste verbraucht die Verbrennungskraftmaschine im Stationärbetrieb erheblich weniger Kraftstoff und erzeugt somit auch geringere Emissionen. Über das der Aufladeeinrichtung zugeordnete Wastegate kann zusätzlich der Massenstrom auf der Turbinenseite gesteuert werden, so dass diese in einem optimalen Wirkungsgrad betrieben wird.

Im dynamischen Betrieb und sowie im Volllastbetrieb der Verbrennungskraftmaschine, so zum Beispiel beim Beschleunigen des Fahrzeugs aus niedrigen Drehzahlen und bei hohen Lastanforderungen, wir die Ventilsteuerung ein- und/oder auslassseitig so eingestellt, dass sich dieselben Verhältnisse, wie oben stehend skizziert, ebenso wie ein möglichst optimales Ausspülen des verbrannten Restgases während des Ladungswechsel einstellen. Die Ventilöffnungs- und Ventilschließzeiten werden weiterhin so gesteuert, dass sich unter Berücksichtigung des Bauteilschutzes, durch zum Beispiel zu hohe Abgastemperaturen oder Sauerstoffkonzentrationen im Auslasskrümmer, die den Turbinenteil der als Turbolader ausgebildeten Aufladeeinrichtung oder den Katalysator schädigen könnten, eine größtmögliche Zylinderfüllung ergibt. Im dynamischen Betrieb der Verbrennungskraftmaschine wird die Drosselklappe vor der Verbrennungskraftmaschine und die Drosselvorrichtung vor dem Verdichtereintritt vollständig geöffnet. Die Ansteuerung der Drosselvorrichtung vor dem Verdichter erfolgt dabei in der Art, dass sich stets der optimale Wirkungsgrad, das schnellste Beschleunigungsverhalten und der schnellste Ladedruckaufbau ergibt.

Über das Wastegate wird ein erhöhter Ladedruck gegenüber dem Stationärbetrieb eingestellt, so dass sich eine erhöhte Spülrate beim Ladungswechsel ergibt. Dadurch strömt ein höherer Abgasmassenstrom über den Turbinenteil der Aufladeeinrichtung, wodurch die bevorzugt als Abgasturbolader ausgebildete Aufladeeinrichtung schneller beschleunigt werden kann. Dies wiederum hat eine verkürzten Ladedruckaufbau zur Folge. Die Ansteuerung des Wastegates erfolgt gleichzeitig der Weise, dass sich ebenfalls ein optimaler Wirkungsgrad im Turbinenteil der Aufladeeinrichtung einstellt und der Abgasgegendruck den Ladedruck nicht übersteigt. In einer besonderen Ausführung der vorliegenden Erfindung lässt sich die Einspritzphase in mehrere Phasen aufteilen. Teile der eingespritzten Kraftstoffmenge können dabei kurz vor dem Öffnen des Auslassventiles eingespritzt werden, damit kurzzeitig eine hohe Temperatur im Abgas entsteht. Die hohe Abgastemperatur erhöht dabei die Antriebsenergie des Turbinenteils der bevorzugt als Abgasturbolader ausgebildeten Aufladeeinrichtung und verursacht eine höhere Beschleunigung der Aufladeeinrichtung. In einer weiteren vorteilhaften Ausführungsvariante kann parallel oder zusätzlich zu dieser Maßnahme auch der Zündwinkel in Richtung spät verschoben werden, um eine späte Verbrennung mit hoher Abgastemperatur zu erreichen. Hat die Verbrennungskraftmaschine ihren neuen stationären Betriebspunkt erreicht, wird auf die weiter oben beschriebene Regelung für den Stationärbetrieb umgeschaltet.

Durch den verkürzten Ladedruckaufbau, der durch die erfindungsgemäß vorgeschlagene Lösung erreicht werden kann, wird im Fahrbetrieb das verzögerte Ansprechverhalten der Verbrennungskraftmaschine auf das vom Fahrer gewünschte Drehmoment spürbar verringert. Der Wirkungsgrad der Verbrennungskraftmaschine lässt sich durch den Einsatz der erfindungsgemäß vorgeschlagenen Lösung sowohl in Stationär- als auch in dynamischen Betriebsphasen verbessern.

### Zeichnung

Anhand der Zeichnung wird die Erfindung nachstehend eingehender beschrieben.

Es zeigt:
- Figur 1: die erfindungsgemäß vorgeschlagene Aufladeeinrichtung mit einer weiteren Drosseleinrichtung, die vor dem Verdichterteil eines Abgasturboladers angeordnet ist und
- Figur 2: eine schematische Darstellung des verbesserten Motormomentaufbaus die durch die Kombination einer Drosselvorrichtung vor dem Verdichter eintritt und Scavenging erreicht wird.

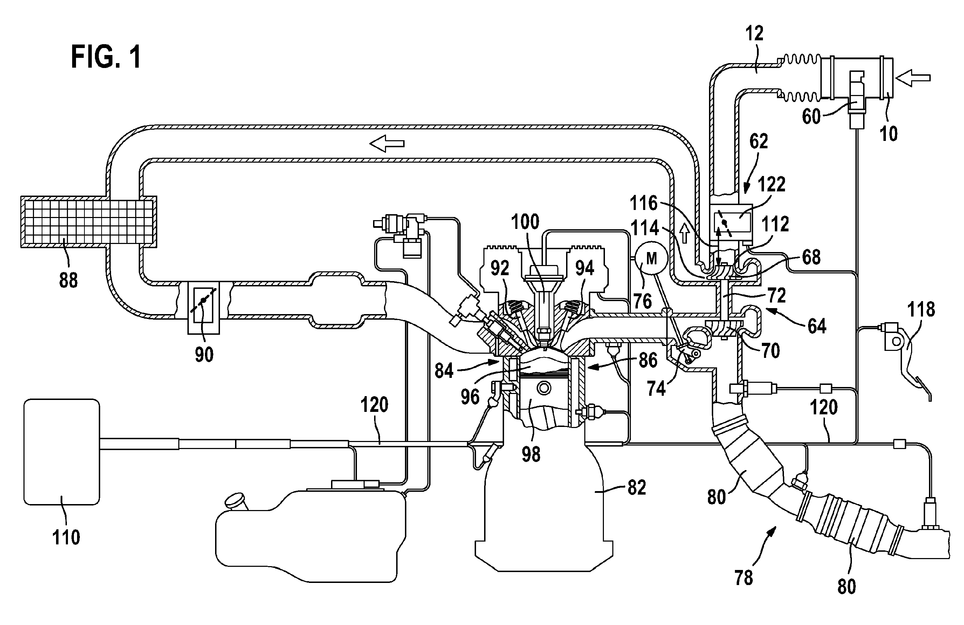

Der Darstellung gemäß Figur 1 ist eine Ausführungsvariante einer Drosseleinrichtung zu entnehmen, die eine Aufladeeinrichtung für eine Verbrennungskraftmaschine eingangsseitig vorgeschaltet ist.

Figur 1 ist entnehmbar, dass ein Ansaugrohr 50 einer Verbrennungskraftmaschine 82 eine weitere Drosselvorrichtung 62 aufnimmt, die einer bevorzugt als Abgasturbolader ausgeführten Aufladeeinrichtung 64 vorgeschaltet ist. Der Aufladeeinrichtung 64 umfasst einen Verdichterteil 68 sowie einen Turbinenteil 70, die zum Beispiel über eine Welle 72 gekoppelt sind. Im Turbinenteil 70 der Aufladeeinrichtung 64 ist ein Wastegate 74 zugeordnet, welches mittels eines Aktuators 76 so zum Beispiel eines elektrischen Stellers, betätigbar ist. Stromab des Turbinenteiles 70 der Aufladeeinrichtung 64 erstreckt sich ein Abgastrakt 78 der Verbrennungskraftmaschine 82 in den mindestens ein Katalysator 80 aufgenommen ist.

Die im Verdichterteil 68 der Aufladeeinrichtung 64 verdichtete Frischluft strömt der Verbrennungskraftmaschine, abgekühlt durch einen Ladeluftkühler 88 zu, wobei der Luftstrom über eine Drosseleinrichtung 90 geregelt wird. An ihrer Einlassseite 84 weist die Verbrennungskraftmaschine 88 eine Anzahl von Einlassventilen 92 sowie eine Anzahl von Auslassventilen 94 auf, die den jeweiligen Brennräumen 96 der Verbrennungskraftmaschine 82 je nach Zylinderzahl zugeordnet sind. Die jeweiligen Brennräume 96 sind durch die Zylinderwand und die Stirnfläche eines Kolbens 98 begrenzt, die Zündung erfolgt über eine Zündspule 100. Wenngleich die Aufladeeinrichtung 64 in der Darstellung gemäß Figur 1 an einer fremdgezündeten Verbrennungskraftmaschine 82 dargestellt ist, so lässt sich diese ebenso in einer selbstzündenden Verbrennungskraftmaschine einsetzen.

Die in Figur 1 dargestellte Ausführungsvariante zeigt, dass die weitere Drosselvorrichtung 62 in Bezug auf einen Verdichtereintritt 112 des Verdichterteiles 68 in einem Abstand 116, einer Totvolumenstrecke entsprechend, angeordnet ist. Es sollte versucht werden, den Abstand 116 so gering wie möglich zu halten. Die weitere Drosselvorrichtung 62 gemäß der Darstellung in Figur 1 kann zum Beispiel über einen Steller 122 betätigt werden, der mit dem Fahrzeugdatenbus, so zum Beispiel einem CAN-Bus 120 in Verbindung steht und auch über diesen betätigbar ist. Der CAN-Bus 120 steht seinerseits mit einem Steuergerät 110 des Fahrzeugs in Verbindung. Der Drehmomentwunsch des Fahrers wird über ein Fahrpedal 118, welches ebenfalls über den bereits erwähnten Fahrzeugdatenbus 120 mit dem Steuergerät 110 in Verbindung steht, an die Verbrennungskraftmaschine 82 übertragen. Während der Verdichtereintritt des Verdichterteiles 68 durch Bezugszeichen 112 gekennzeichnet ist, ist der Austritt des Verdichterteiles 68 der Aufladeeinrichtung durch Bezugszeichen 114 identifiziert. Die in Figur 1 dargestellte weitere Drosseleinrichtung 62, die über den Steller 122 betätigbar ist, kann als Drosselklappe, als Stauklappe, als Drosselventil oder als Irisblende ausgeführt werden. Über die weitere Drosseleinrichtung 62 kann die Luftzufuhr der Aufladeeinrichtung 64 begrenzt werden. Der Vorteil der Androsselung einer als Abgasturbolader ausgebildeten Aufladeeinrichtung 64 ist darin zu erblicken, dass durch die Androsselung der Frischluftströmung die Arbeit, die der Verdichterteil 68 der Aufladeeinrichtung 64 für das Verdichten der angesaugten Frischluft aufbringen muss, deutlich reduziert wird. Somit können die Laufräder einer insbesondere als Abgasturbolader ausgebildeten Aufladeeinrichtung 64 schneller auf die notwendige Drehzahl beschleunigt werden. Dadurch ist ein schnellerer Ladedruckaufbau erzielbar.

Ein weiterer Vorteil, der durch die dem Verdichtereintritt 112 vorgeschaltete weitere Drosseleinrichtung 62 erzielbar ist, liegt darin, dass durch die Androsselung über die weitere Drosseleinrichtung 62 der Volumenstrom zum Laufrad des Verdichterteiles 68 deutlich erhöht wird und somit der Wirkungsgrad der Aufladeeinrichtung 64 gesteigert werden kann. Um eine wirkungsgradsteigernde Verschiebung der Betriebspunkte in Richtung auf höhere Wirkungsgrade hin zu erreichen, sollte die weitere Drosselvorrichtung 62 sehr nahe am Verdichtereintritt 112 platziert werden, d.h. der Abstand 116 gemäß der Darstellung in Figur 1 minimiert werden. Dadurch ergibt sich ein möglichst kleines Totvolumen zwischen der weiteren Drosselvorrichtung 62 und dem Verdichtereintritt 112. Beim Beschleunigen des Fahrzeugs in Teillastpunkten mit niedriger Drehzahl und hoher Lastanforderung, wird die weitere Drosselvorrichtung 62 über den Steller 122 jeweils soweit geschlossen, dass sich der bestmögliche Wirkungsgrad des Verdichterteiles 68 der Aufladeeinrichtung 64 einstellt. Um dies zu erreichen kann, die bisher eingesetzte Ladedruckregelung leicht modifiziert ausgebildet werden und im Wesentlichen unverändert wieder verwendet werden. Es sind lediglich Maßnahmen zum Bauteilschutz, so zum Beispiel zur Vermeidung von zu hohen Drehzahlen der Aufladeeinrichtung 64 zu beachten.

Durch das Androsseln des dem Verdichterteil 68 zuströmenden Frischluftstroms wird in dem Totvolumen zwischen der weiteren Drosselvorrichtung 62 und dem Verdichtereintritt 112 lokal ein Unterdruck erzeugt. Dadurch sinkt die Dichte der angesaugten Frischluft und der Volumenstrom steigt an. Aufgrund dieses Umstandes ist die zu verrichtende Arbeit des Verdichterteiles 68 der Aufladeeinrichtung 64 effizient reduziert, so dass ein größerer Anteil der Leistung des Turbinenteiles 70 der Aufladeeinrichtung 64 in Rotationsenergie umgesetzt werden kann. Dadurch lässt sich ein deutlich schnelleres Ansprechen der bevorzugt als Abgasturbolader beschaffenen Aufladeeinrichtung 64 erzielen.

Hat der Verdichterteil 68 der bevorzugt als Abgasturbolader ausgebildeten Aufladeeinrichtung 64 seinen Betriebspunkt bzw. seine Betriebsdrehzahl erreicht, kann die weitere Drosselvorrichtung 62 gezielt in eine Position gefahren werden, die den optimalen Wirkungsgrad des Verdichterteiles 68 der bevorzugt als Abgasturbolader ausgebildeten Aufladeeinrichtung 64 gewährleistet. Dies ist möglich, da der über den Fahrer mittels des Fahrpedales 118 an die Verbrennungskraftmaschine 82 übermittelte Drehmomenterhöhungswunsch im Steuergerät 110 vorliegt, welches über den Fahrzeugdatenbus so z.B. ein CAN-BUS 120 gleichfalls mit dem Steller 122 der weiteren Drosseleinrichtung 62 verbunden ist. Daher kann eine Umsetzung eines erhöhten Drehmomentwunsches des Fahrers, ausgelöst über eine Veränderung der Stellung des Fahrpedales 118 über das Steuergerät 110 und den Fahrzeugdatenbus 120 direkt in eine Betätigung des bevorzugt elektrisch ausgebildeten Stellers 122 für die weitere Drosselvorrichtung 62 umgesetzt werden. Die in Figur 1 dargestellte, über einen elektrischen Steller 122 angesteuerte weitere Drosselvorrichtung 62 kann sowohl in Form einer Drosselklappe, einer Stauklappe, eines Drosselventils oder einer Irisblende ausgebildet sein. Anzustreben ist eine möglichst geringe Totvolumenstrecke 116 zwischen der weiteren Drosselvorrichtung 62 und dem Verdichtereintritt 112.

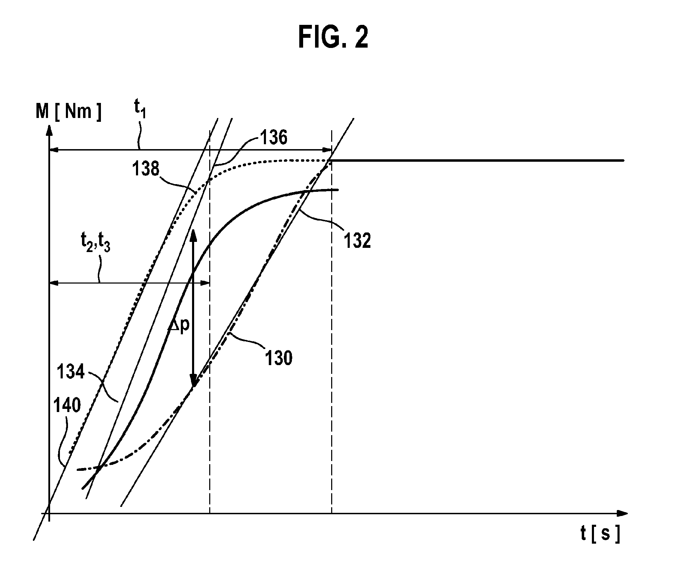

Der Darstellung gemäß Figur 2 ist eine schematische Darstellung des verbesserten Motormomentenaufbaus durch Kombination einer dem Verdichtereintritt vorgeschalteten Drosselvorrichtung und Scavenging zu entnehmen.

Dem Diagramm gemäß Figur 2 ist entnehmbar, dass sich ohne den Einsatz der weiteren Drosselvorrichtung 62 ein erster Momentenaufbau 130 der Verbrennungskraftmaschine 82 einstellt, dessen Anstiegsflanke durch 132 angedeutet ist. Nach einer ersten Ansprechzeit t₁ steht das Volllastmoment zur Verfügung.

Demgegenüber kann eine Verkürzung der ersten Ansprechzeit t₁ hinsichtlich des Aufbaus des Volllastmomentes durch Restgasminimierung (Scavenging) erreicht werden, was zum Anliegen des Volllastmomentes nach einer zweiten Ansprechzeit t₂ führt. Ein zweiter Momentenaufbau 134 unter Berücksichtigung der Restgasminimierung innerhalb der Brennräume der Verbrennungskraftmaschine 82 ist durch eine steilere Anstiegsflanke 136 gekennzeichnet. Die Momentenerhöhung im Vergleich zum Momentenaufbau 130 ohne Restgasminimierung und ohne eine weitere Drosselvorrichtung 62 rührt aus der mit Δp dargestellten Steigerung des Brennraumdruckes innerhalb der Brennräume der Verbrennungskraftmaschine 82 her.

Eine signifikante Verbesserung des Momentenaufbaus der Verbrennungskraftmaschine 82 ist durch einen dritten Momentenaufbau 138 dargestellt. Der dritte Momentenaufbau 138 ist durch den Einsatz der weiteren Drosselvorrichtung 62 vor dem Verdichtereintritt 112 erreichbar, wobei die weitere Drosselvorrichtung 62 in einem minimalen Abstand, d.h. minimierter Totvolumenstrecke 116 in Bezug auf den Verdichtereintritt 112 angeordnet ist. Werden die weitere Drosselvorrichtung 62 sowie eine Restgasminimierung durch entsprechend angepasste Ventilsteuerzeiten an der Verbrennungskraftmaschine 82 implementiert, so stellt sich an dieser der dritte Momentenaufbau 138 ein, dessen Anstiegsflanke 140 im wesentlichen der Anstiegsflanke 136 des Momentenaufbaus 134 mit Restgasminimierung entspricht. Die durch den dritten Momentenaufbau 138 gegebene Zeitspanne, in der das Volllastmoment der Verbrennungskraftmaschine 82 erreicht wird, ist durch t₃ dargestellt und kürzer als die Ansprechzeit t₂.

Aus der Gegenüberstellung der unterschiedlichen Varianten des Momentenaufbaus 130, 134 bzw. 138 gemäß Figur 2 geht hervor, dass durch eine Kombination einer dem Verdichtereintritt 112 in minimalem Abstand 116 d.h. minimaler Totvolumenstrecke 116 vorgeschalteten weiteren Drosselvorrichtung 62 der schnellste Momentenaufbau an der Verbrennungskraftmaschine 82 erreicht werden kann. In diesem Falle liegt das Volllastmoment gemäß des durch Bezugszeichen 138 identifizierten Momentenaufbaus, bereits nach weniger als zwei Sekunden Ansprechverzögerung vor.

## Patentansprüche

1. Aufladeeinrichtung (64) mit einem Verdichterteil (68) und einem Turbinenteil (70) für eine Verbrennungskraftmaschine (82), mit einer Drosseleinrichtung (90), die der Verbrennungskraftmaschine (82) einlassseitig zugeordnet ist, **dadurch gekennzeichnet, dass** dem Verdichterteil (68) der Aufladeeinrichtung (64) eingangsseitig eine weitere Drosseleinrichtung (62) vorgeschaltet ist.

2. Aufladeeinrichtung gemäß Anspruch 1, **dadurch gekennzeichnet, dass** die weitere Drosseleinrichtung (62) vom Verdichtereintritt (112) des Verdichterteiles (68) in einem ein minimales Totvolumen von Frischluft zwischen dem Verdichterteil (68) und der Drosseleinrichtung (62) ermöglichenden Abstand (116) angeordnet ist.

3. Aufladeeinrichtung gemäß Anspruch 1, **dadurch gekennzeichnet, dass** der weiteren Drosseleinrichtung (62) ein Steller (122) zugeordnet ist, der über eine Schnittstelle (120) mit einem Steuergerät (110) der Verbrennungskraftmaschine (82) verbunden ist.

4. Aufladeeinrichtung gemäß Anspruch 3, **dadurch gekennzeichnet, dass** die weitere Drosseleinrichtung (62) klappenförmig ausgeführt ist.

5. Aufladeeinrichtung gemäß Anspruch 1, **dadurch gekennzeichnet, dass** die weitere Drosseleinrichtung (62) als Irisblende ausgeführt ist und in ein Ansaugrohr (50) der Verbrennungskraftmaschine (82) eingelassen ist.

6. Aufladeeinrichtung gemäß der Ansprüche 4 oder 5, **dadurch gekennzeichnet, dass** die weitere Drosseleinrichtung (62) der Strömung vor einem Verdichtereintritt (112) einen Vordrall aufprägt.

7. Verfahren zur Steigerung des Ladedruckaufbaus einer Aufladeeinrichtung (64) mit einem Verdichterteil (68) und einem Turbinenteil (70) für eine Verbrennungskraftmaschine (82), **dadurch gekennzeichnet, dass** durch eine weitere Drosseleinrichtung (62) in einem zwischen dieser und einem Verdichtereintritt (112) vorhandenen Frischluftvolumen lokal ein Unterdruck erzeugt wird.

8. Verfahren gemäß Anspruch 7, **dadurch gekennzeichnet, dass** durch die dem Verdichterteil (68) der Aufladeeinrichtung (64) vorgeschaltete Drosseleinrichtung (62) der dem Verdichterteil (68) zugeführte Volumenstrom erhöht wird.

9. Verfahren gemäß Anspruch 8, **dadurch gekennzeichnet, dass** in Teillastpunkten der Verbrennungskraftmaschine (82) die Drosseleinrichtung (62) so angesteuert wird, dass sich der jeweils optimale Wirkungsgrad des Verdichterteiles (68) einstellt.

10. Verfahren gemäß Anspruch 8, **dadurch gekennzeichnet, dass** nach Erreichen des vom Fahrer gewünschten Drehmomentes der Verbrennungskraftmaschine (82), übermittelt über ein Fahrpedal (118) an ein Steuergerät (110), die Drosseleinrichtung (62) kontinuierlich in einer den optimalen Wirkungsgrad des Verdichterteils (68) sicherstellenden Position gehalten wird.

11. Verfahren gemäß Anspruch 8, **dadurch gekennzeichnet, dass** durch eine Restgasminimierung beim Ladungswechsel in den Brennräumen der Verbrennungskraftmaschine (82) mit einer vollvariablen Ventilsteuerung eine Verkürzung einer Ansprechverzögerungszeit t₂ bis zum Erreichen des Volllastmomentes der Verbrennungskraftmaschine (82) erreicht wird.

12. Verfahren gemäß Anspruch 8, **dadurch gekennzeichnet, dass** durch die weitere, dem Verdichtereintritt (112) vorgeschaltete Drosseleinrichtung (62) und eine Restgasminimierung ein Minimum t₃ der Ansprechzeitverzögerung bis zum Erreichen des Volllastmomentes der Verbrennungskraftmaschine (82) erreicht wird.
